# EUROPEAN PATENT APPLICATION

(11) **EP 0 739 594 A1**
(43) Date of publication of application: **30.10.1996**
(21) Application number: 95106459.1
(22) Date of filing: 28.04.1995
(51) Int. Cl.: A23L 3/16, A23C 19/08

(54) **A method and an apparatus for treating a continuous product stream of a liquid or a semi-liquid food product**

(71) Applicant: KRAFT JACOBS SUCHARD R & D, INC., Rye Brook, New York 10573 (US)
(72) Inventor: Anbarci, Ahmet, Dr., D-82008 Unterhaching (DE); Rose, Mehran, D-81825 Muenchen (DE); Schall, Rudolf, D-85652 Pliening (DE)
(74) Representative: Weickmann, Heinrich, Dipl.-Ing.

(57) **Abstract**

A continuous product stream of a liquid or a semi-liquid food product flows along a flow path (22,18,36,24,26). A turbulence is created in this product stream within a turbulent flow path section (36) of said flow path (22,18,36,24,26) and a treating fluid (at 52) is injected into the turbulent flow path section (36). The product is recirculated within the length of the turbulent flow path section (36) along a loop (102) having a loop axis (103) substantially perpendicular to a general flow direction (104) of said product stream through said turbulent flow path section (36).

## Description

### BACKGROUND OF THE INVENTION

In the production of food products such as process cheese-type products or mayonnaise-type products it is frequently required to introduce treating fluids into the product stream. Generally it is desirable to finely distribute the treating fluid within the product stream. The treating fluid may be, for example, a heating steam in cases in which the product is to be heated for further processing or to be pasteurized/sterilized.
Alternatively the treating fluid may be a whipping fluid such as a gas-phase or a vapor-phase fluid which is introduced into the product stream for imparting foam-shaped consistency to the product.

### STATEMENT OF THE PRIOR ART

From German patent DE 41 04 686 C2 corresponding to European patent publication 0 499 041 A1 it is known to heat a process cheese product by injecting steam into a flow path along which the process cheese product is conveyed. The injection of the steam occurs near the entrance of the product stream into a mixing zone. According to a statement in claim 11 the steam can be injected alternatively into the mixing zone.

It has been found that the distribution of the steam within the product stream is not fully satisfactory. The poor distribution of the steam within the product stream is objectionable for the following reasons:

Assuming that the product of the product stream is to be heated from a lower temperature at a location upstream the location of injection of the heating steam to a considerable higher temperature a considerable amount of heating steam must be introduced to the product and the heating steam must be at a temperature considerably higher than the final temperature. If the product is to be heated, for example, from ambient temperature to a temperature of about 95°C for pasteurization/sterilization purposes the heating steam to be used should have a temperature considerably higher than 140°C and up to 170°C. This involves the problem of overheating and as a consequence thereof a degradation of the process cheese product. The risk of degradation is increased with increasing temperature of the heating steam and further increased in dependency of the time interval during which a volume element of the process cheese product is in contact with the heating steam of about 140°C.

From U.S. patent 1 639 828 a process for the treatment of cheese is known in which cheese is conveyed along a conveyor tube. A rotating shaft extends along the axis of the conveyor tube. In a first section of the conveyor tube mixing paddles are mounted on the rotating shaft and in a second section a helical conveyor is mounted on the shaft. Steam is injected into the first section of the conveyor tube by a plurality of steam injection orifices distributed along one single line extending substantially parallel to the shaft. Carbon dioxide is introduced into the second section of the conveyor tube by a further plurality of nozzles which are distributed along a single line substantially parallel to the shaft.

From U.S. patent 2 021 899 a treatment of cheese is known in which cheese is conveyed along a conveyor tube containing a helical conveyor. The shaft is hollow and is connected to a source of steam. The steam is injected into the cheese stream by a plurality of steam nozzles distributed along the length of the hollow shaft.

From a brochure of the J.H. Day Company titled "Something New From J.H. DAY, Revolutionary Concept in Blending Technology", page 4, a double helix continuous ribbon agitator is known.

### OBJECT OF THE INVENTION

It is a primary object of the present invention to provide a method of injecting a treating fluid into a continuous product stream of liquid or semi-liquid food product which method results in an improved distribution of the treating agent throughout the product stream.

A further object of the invention is to introduce the treating fluid into the product stream with a highly uniform distribution within a mixing zone of a small volume.

A further object of the invention is to create strong turbulence within a mixing zone at least at the locations of injection of the treating fluid.

A still further object of the invention is to allow for the introduction of hot treating fluids into the product stream without the risk of the thermal degradation of the product.

### SUMMARY OF THE INVENTION

For achieving at least part of the objects a method of treating a continuous product stream is proposed. A liquid or a semi-liquid food product flows along a flow path. A turbulence is created in the product stream at least within a turbulent flow path section of the flow path. A treating fluid is injected into the turbulent flow path section. The product is recirculated substantially within the length of the turbulent flow path section along at least one loop, said loop having a loop axis substantially perpendicular to a general flow direction of the product stream through the turbulent flow path section.

It has been found that in using this method a highly improved distribution of the treating fluid throughout the food product is obtained.

A substantially toroidal recirculation stream may be created within the turbulent flow path section with a toroid axis substantially parallel to the general flow direction through the turbulent flow path section. When providing such a toroidal recirculation stream a high degree of turbulence is created not only where the toroidal recirculation stream is in contact with stream confining walls, but also in interfaces between stream sections of opposite flow direction. This high turbulence causes a highly uniform distribution of the treating fluid within the product when regarded at the downstream end of the turbulent flow path section.

The toroidal recirculation stream can be shaped such that - when regarded in a plane of longitudinal section containing the general flow direction - a sectional area of the toroidal recirculation stream has a longer sectional area axis in parallel with the general flow direction and a shorter sectional area axis perpendicular to said general flow direction. This shape of the toroidal recirculation stream provides a large interface between stream sections of opposite flow directions.

The toroidal recirculation stream preferably has a recirculation direction such that in a radially inner zone of said toroidal recirculation stream the flow direction of the toroidal recirculation stream is substantially opposite to the general flow direction. This feature is regarded as responsible for avoiding to a high degree a direct passage of volume elements of the product stream through the turbulent flow path section without being involved in the recirculation stream.

The toroidal recirculation stream can be generated by helical conveyor units having a common axis substantially parallel to or coincident with the general flow direction. These helical conveyor units comprise at least one radially inner and one radially outer conveyor unit axially overlapping each other with the radially inner and the radially outer conveyor units having axially opposite conveying directions. In this embodiment a shearing zone creating high turbulence exists at the interface between the radially inner and the radially outer conveyor unit.

A most uniform distribution of the treating fluid is obtained on introducing treating fluid jets into the turbulent flow path section when these treating fluid jets are distributed along a substantial part of the length of said turbulent flow path section along the general flow direction of said product stream.

The uniformity of distribution can be still further improved when the treating fluid jets are additionally substantially evenly distributed over circumferential confining wall means circumferentially confining said turbulent flow path section. By evenly distributing the treating fluid jets over the total surface or at least a major part of the surface circumferentially confining the flow path section, it is possible in case of a small volume of the turbulent flow path section to introduce a relatively large amount of treating fluid per time unit into the product stream while avoiding at the respective locations of treating fluid jets excessive local enrichment of the food product with treating fluid. Thus, the uniform distribution of the treating fluid throughout the food product can be accelerated.

The method of this invention may be applied for heating the respective product stream. In this case the treating fluid may be a heating steam and preferably a saturated heating steam. By heating the food product a pasteurization/sterilization effect may be obtained. Alternatively, the heating of the product stream may be necessary for preparing a further treatment of the product which requires the product at increased temperature.

It is possible that the heating steam is introduced into the turbulent flow path section at a temperature higher than a degradation temperature of the respective food product because due to the concept of the present invention the heating steam is rapidly distributed throughout the food product contained within the turbulent flow path section. The amount of heat supplied to a volume element of food product directly exposed at a certain time during a time interval to a heating steam jet is rapidly distributed throughout a larger volume of the food product by the turbulence. Thus, the temperature of the heating steam is rapidly decreased by heat transition to the increasing volume of food product. The steam is rapidly condensed due to the heat transition to the product. The time of exposure of the food product to the steam temperature at the respective location of injection is relatively short. As the degradation of the food product is not only dependent on the temperature of the steam at the location of injection, but also dependent on the time of exposure to the high temperature, the risk of degradation is decreased.

The volume of the turbulent flow path section, the flow rate of the product stream through the flow path, the rheological behavior of the food product, the heat conductivity of the food product, the specific heat of the food product, the total input rate of heating steam, the distribuion of heating steam injection means over the turbulent flow path section, the heating steam temperature and the turbulence of the product stream may be selected such that a major portion of infinitesimally small volume elements of the product stream is subject to a temperature-time-profile admissible for the respective food product.

By the term "admissible for the respective food product" one has to understand that on the one hand the exposure to the heating steam is sufficient for obtaining a desired effect of pasteurization/sterilization and that on the other hand the exposure to the heating steam avoids thermal degradation.

In order to obtain a predetermined degree of pasteurization/sterilization on the one hand and to avoid thermal degradation of the food product on the other hand, one may proceed as follows:
a) measuring at least one parameter representing a degree of pasteurization/sterilization at a respective measuring location downstream said turbulent flow path section;
b) measuring at least one parameter representing a degree of thermal degradation of the food product at a respective measuring location downstream said turbulent flow path section;
c) adjusting at least one of a heating steam inlet temperature and a heating steam input rate in dependency of the difference between said measured parameter representing the degree of pasteurization/sterilization and a predetermined value of said parameter representing the degree of pasteurization/sterilization;
d) adjusting the recirculation in dependency of the difference between said measured parameter representing the degree of degradation and a predetermined value of said parameter representing the degree of degradation.

As a parameter representing the degree of pasteurization/sterilization one may measure, for example, the temperature of the food product at the exit of the turbulent flow path section. Alternatively, one may also take a sample of the food product at the down-stream exit and count the number of microbes per volume unit according to a usual method of microbiology.

As a parameter representing the degree of thermal degradation one may also take a sample and measure by filtering the amount of curd specks contained therein (in assuming that the food product is a process cheese-type product). Alternatively, one may pass the total product stream or at least a bypass-stream thereof through a filter located downstream of the turbulent flow path section and measure at predetermined time intervals the amount of curd specks collected on the input side of the filter.

Assuming that the turbulent flow path section is confined by flow path section confining means, for example cylindrical flow path section confining means, these flow path section confining means may be cooled. The cooling may be performed by a cooling agent flowing along and/or around the outer side of the flow path section confining means. This cooling is of particular interest near locations of heating fluid injection, so that the flow path section confining means are prevented from becoming overheated due to being close to the heating steam injection means.

The method of the invention and more particularly the method of heating is particularly applicable to milk-based products which frequently require a pasteurization/sterilization treatment. Further the product may be one of a process cheese-type product or a process cheese-type preproduct.

As used herein, the term "process cheese-type products" includes those products known and referred to as "pasteurized process cheese", "pasteurized process cheese food", "pasteurized process cheese spread" and "pasteurized process cheese product". "Process cheese-type products" also includes products resembling process cheese, process cheese food, process cheese spread and process cheese product, but which may not meet the U.S. Federal Standards of Identity for any of the above products in that they contain ingredients not specified by such standards, such as vegetable oil or vegetable protein, or do not meet the compositional requirements of such standards. Process cheese-type products also includes any product having the flavor and texture of a process cheese-type product regardless of the ingredients or manufacturing steps employed, and regardless of whether the standards which exist are met.

Frequently process cheese-type products are based on some kind of natural cheese. "Natural cheese" is generally made by taking animal milk, developing acidity and setting the milk with a clotting agent, such as rennet, or by developing acidity to the isoelectric point of the protein. The set milk is cut and whey is separated from the resulting curd. The curd may be pressed to provide a cheese block and curing takes place over a period of time under controlled conditions. A product having flavor and body characteristics of natural cheese has been made by replacing at least a portion of the animal fat of the milk with a vegetable fat, such as corn oil and/or by replacing at least a portion of the casein of the milk with an analog protein.

It is well known to provide a product having some of the characteristics of natural cheese by grinding a natural cheese, and heating it with an emulsifying salt. The name given to the resulting product depends upon the ingredients used and its composition and, in some instances, is determined by relulations promulgated by the U.S. Food and Drug Administration 21 C.F.R. §133.169-180. For example, the term "pasteurized process cheese" refers to a product comprising a blend of cheeses to which an emulsifying agent, usually an emulsifying salt, and possibly acids, are added, the mixture is then worked and heated into a homogeneous plastic mass.

The term "pasteurized process cheese food" refers to a product which is prepared from the same materials and the same processes used for manufacture of process cheese. However, cheese food generally has dairy ingredients added thereto, such as cream, milk, skimmed milk, whey or any of these from which part of the water has been removed (e.g., concentrated skimmed milk). The moisture level in process cheese food is generally higher than that of process cheese and may be up to about 44%. Fat is present at a level of not less than 23%.

The term "pasteurized process cheese spread" refers to a product which is similar to cheese food, in the sense that it can contain the indicated dairy ingredients. Process cheese spread, however, may have a moisture level as high as 60%. The minimum fat level for cheese spread is 20%.

Process cheese, process cheese food and process cheese spread are referred to as "standardized products", since their methods of manufacture and composition are determined by Federal Standards of Identity.

All the above mentioned products may be submitted to the method of the present invention and more particularly to the heating method of the present invention.

The term "process cheese-type preproduct" as used here particularly, but not exclusively, includes the mixture of natural cheese and additives added thereto coming from a usual blender via an "Auger-pump". Further, the method of this invention is applicable to mayonnaise-type products. These mayonnaise-type products are frequently to be whipped. This can be perfomed by introduction of gases in a finely distributed form such as atmospheric air or nitrogen gas. By the introduction of gases which can be obtained according to this invention a certain foaming action is obtained.

The term "treating fluid" comprises also fluid and more particularly liquid additives to the product stream such as emulsifiers, condiments and pH adjusting additives.

In case of using heating steam as a treating fluid of the present invention it is preferably a saturated steam. By the use of saturated steam, the lifetime of steam bubbles within the product can be reduced and the risk of overheating and degradation can be kept at a minimum.

According to a further aspect of the invention a continuous product stream of a liquid or a semi-liquid food product flowing along a flow path is treated as follows:
turbulence is created within a turbulent flow path section of said flow path and a treating fluid is jet-wise introduced into said turbulent flow path section;
the treating fluid jets are introduced into said turbulent flow path section at locations substantially evenly distributed over at least an axial middle portion of a circumferential confining means confining said turbulent flow path section.

This middle portion may comprise at least 20%, preferably at least 50% of the axial length of the turbulent flow path section. By substantially evenly or uniformly distributing the treating fluid jets over a major length of the confining means of the turbulent flow path section, one can again achieve an even or uniform distribution of the treating fluid within the product stream even if the volume of the turbulent flow path section is small.

The treating fluid is generally introduced into the product stream through and adjacent to circumferential wall means of the turbulent flow path section. Alternatively or additionally it is possible to introduce the treating fluid also at locations radially inward of the circumferential wall means. Thus, the locations of introduction of the treating fluid may be distributed over at least a part of the total volume of the turbulent flow path section. This allows to introduce even greater amounts of treating fluid into the product stream at a given volume of the turbulent flow path section without the risk of excessive enrichment of treating fluid in singular volume elements of the total volume of the turbulent flow path section.

The introduction of treating fluid into the turbulent flow path section at locations inward of the circumferential wall means can be easily obtained in case of turbulence creating paddles by providing stator blades projecting inward from one circumferential wall means confining the turbulent flow path section. When using helical conveyor units according to a preferred embodiment of the present invention for creating turbulence the introduction of the treating fluid at locations radially inside from the circumferential wall means may be obtained, for example, by providing fluid inlet nozzles on a shaft to which the helical conveyor units are mounted or on the helices themselves.

The invention further relates to an apparatus for treating a continuous stream of a liquid or a semi-liquid food product flowing along a flow path. The apparatus is as follows:
a treating chamber is arranged in series within the flow path and confined by chamber confining means;
turbulence creating means are provided within a treating chamber for creating turbulence in the product stream;
treating fluid injection means are provided for injecting treating fluid into the treating chamber;
the turbulence creating means comprise recirculation impelling means for recirculating the product substantially within the length of the treating chamber along at least one loop having a loop axis substantially perpendicular to a general flow direction of the product stream through the treating chamber.

The treating chamber may have an inlet end portion, an outlet end portion and an axis extending between the inlet end portion and the outlet end portion. Circumferential wall means may extend around the axis and the recirculation impelling means may comprise a radially outer helical conveyor unit and a radially inner helical conveyor unit arranged about this axis. These conveyor units have axialy opposite conveying directions such as to create a toroidal recirculation flow.

The radially inner and radially outer helical conveyor units may be fixed on a common driving shaft and have opposite winding directions. The radially inner and the radially outer conveyor units may form a radial interspace between each other. The radially inner helical conveyor unit may have a conveying direction opposite to said general flow direction. The radial width of this interspace defines an annular shearing zone between axially oppositely flowing stream sections of the toroidal recirculation stream.

In order to prevent that a major part of the food product entering into the turbulent flow path section flows directly through the turbulent flow path section without participating in the recirculation it is very helpful that the radially inner helical conveyor unit has a conveying direction opposite to the general flow direction. For promoting the formation of a toridal reciculation at least one of the end portions of the treating chamber may be provided with stream inverting means. These inverting means may be stream inverting face means shaped in accordance with the intended form of the toroidal recirculation stream.

At least one of the inlet end portion and the outlet end portion may have an inlet opening and an outlet opening, respectively, in a central location with respect to said axis.

Treating fluid injection means may be substantially evenly distributed over at least an axial middle portion of the circumferential wall means. This middle portion may extend along at least 20%, preferably at least 50%, of the axial length of the treating chamber between the end portions thereof.

The treating fluid injection means may be usual injection nozzles. These injection nozzles may be either nozzles with a full circular cross-section or with an annular cross-section. The term "jet" as used here covers the jet form obtained by both types of nozzles.

The treating fluid injection means may comprise non-return fluid inlet nozzles for avoiding entrance of the product to be treated into the nozzles and into the fluid lines by which the nozzles are connected with the respective source of treating fluid. At least part of the chamber confining means may be provided with cooling means. The cooling means may be used for heat exchange with the product stream passing through the treating chamber. If the apparatus is used for heating the product stream by steam injection the cooling means may serve to avoid overheating of the circumferential wall means of the treating chamber adjacent the inlet nozzles of the heating steam. If other treating fluids are to be introduced into the product stream the cooling means are alternatively analogous heating means used for maintaining the product at a desired temperature.

A back flow conduit may be provided extending between respective locations of the flow path downsteam and upstream of the treating chamber and a flow control means may be allocated to the back flow conduit. This flow conduit allows the performance, for example, of an initial phase of a continuous treating process without considerable production of non-sufficiently treated initial phase product.

The product may be recirculated to the back flow conduit until a steady state has been achieved, then the flow control means may be used to close the back flow conduit and to allow the product to flow to a station of further treatment.

According to a further aspect of the invention the apparatus for treating a continuous stream of a liquid or a semi-liquid food product flowing along a flow path is as follows:
a treating chamber is arranged in series within the flow path;
turbulence creating means are provided within a treating chamber for creating turbulence of a product stream;
treating fluid injection means are provided for injecting treating fluid into the treating chamber;
the treating chamber has an inlet end portion, an outlet end portion and an axis extending between the inlet end portion and the outlet end portion. Circumferential wall means extend around the axis. The treating fluid injection means may be substantially evenly distributed over at least an axial middle portion of the circumferential wall means.

The middle portion may extend along at least 20%, preferably at least 50%, of the axial length of said treating chamber between the end portions thereof. The turbulence creating means may be provided, for example, by paddles mounted on a rotatable shaft extending along the axis.

In such a construction it is easily possible to provide treating flow injection means arranged within said treating chamber at locations spaced in radial inward direction from the circumferential wall means. These treating fluid injection means may be, for example, mounted on stator blades extending from the circumferential wall means in radially inward direction.

If the treating chamber is to be used as a heating chamber the treating fluid injection means may be steam injection means connected to a source of heating steam. If the treating chamber is to be used as a whipping chamber the fluid injection means may be connected to a source of a gas-phase or vapor-phase whipping fluid.

While the treating fluid has been described above as a heating steam or a vapor-phase or a gas-phase whipping fluid, it is to be noted that also liquid treating fluids may be used.

The method and the apparatus of the invention allows to prevent vapor bubbles within the product stream at the outlet opening at the latest and preferably also within the treating chamber. This is highly desirable for avoiding "burning" of the product and thermal degradation.

The recirculation within the treating chamber is preferably obtined by the cooperation of a radially outer and a radially inner helical conveyor unit. It is to be noted, however, that a certain degree of toroidal recirculation within the treating chamber can also be achieved when omitting the radially inner conveyor unit. This is particularly true if the conveying direction of the radially outer conveyor unit is equidirectional with the general direction of flow within the treating chamber and if stream inverting faces are provided at least at one of the end portions of the treating chamber. The stream inverting faces may be provided by a dome-shaped cover.

A most important advantage of the present invention is that within a small treating chamber of, for example, 2600 cm³ a large flow rate of the product stream can be treated with, for example, a temperature raise from 20°C to 98°C. Thus, this invention is applicable also to existing production lines.

The various features of novelty which characterize the invention are pointed out with particularity in the claims annexed to and forming part of the disclosure. For a better understanding of the invention, its operating advantages and specific objects attained by its use, reference should be had to the accompanying drawings and descriptive matter in which there are illustrated and described preferred embodiments of the invention.

### BRIEF DESCRIPTION OF THE DRAWINGS

The invention will be explained in greater detail hereinafter with reference to an embodiment shown in the accompanying drawings in which
- Fig. 1: shows an apparatus of this invention for performing a method of the invention;
- Fig. 2: shows a detail at II of Figure 1 and
- Fig. 3: shows the apparatus of Fig. 1 in a process cheese production line.

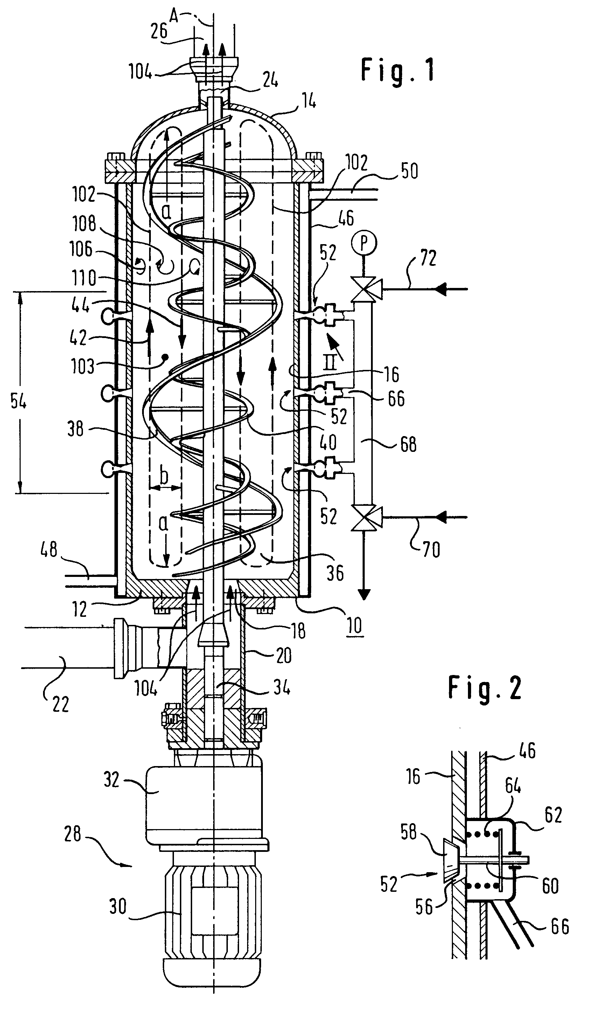

In Fig. 1 there is shown a treating vessel 10 with end walls 12 and 14 and a circumferential wall 16 is of substantially cylindrical shape and has an axis A. The end wall 12 has a central opening 18 to which an inlet pipe 20 is connected to which again adjoins a line 22 coming from an inlet pump. The domed end wall 14 has a central outlet opening 24 which is connected to a further line 26. On the inlet pipe 20 there is mounted a driving unit 28 comprising an electric motor 30 and a gear box 32. A conveyor shaft 34 is drivingly connected with the gear box 32 and enters into a treating chamber 36 confined by the treating vessel 10. Inside the treating chamber 36 the conveyor shaft 34 is provided with a first helical conveyor unit 38 and a second helical conveyor unit 40. The first helical conveyor unit 38 is a radial outer one and the second helical conveyor unit 40 is a radially inner one. The winding senses of the units 38 and 40 are opposite so that on common rotation of the units 38 and 40 with the conveyor shaft 34 the first helical conveyor unit 38 provides a conveying direction according to arrow 42 and the second helical conveyor unit provides conveying direction according to arrow 44. The circumferential wall 16 is surrounded by a cooling jacket 46 connected to a cooling agent inlet 48 and a cooling agent outlet 50. The circumferential wall 16 is provided with a plurality of inlet nozzles 52 which are arranged along a middle section 54 of the circumferential wall 16 and distributed with equal angular distances around the axis A.

For more details of the inlet nozzles 52 it is referred to Fig. 2. The inlet nozzles 52 comprise an inlet opening 56 and a valve body 58. The valve body 58 is guided by a valve shaft 60 in a valve housing 62 and biased by a spring 64 toward a closing position. The valve housing 62 is connected by a supply line 66 to a manifold 68. The manifold 68 is connected to a treating fluid supply line 70 and a cleaning liquid connection line 72.

The axis A of the vessel is vertical such that the vessel can be easily discharged.

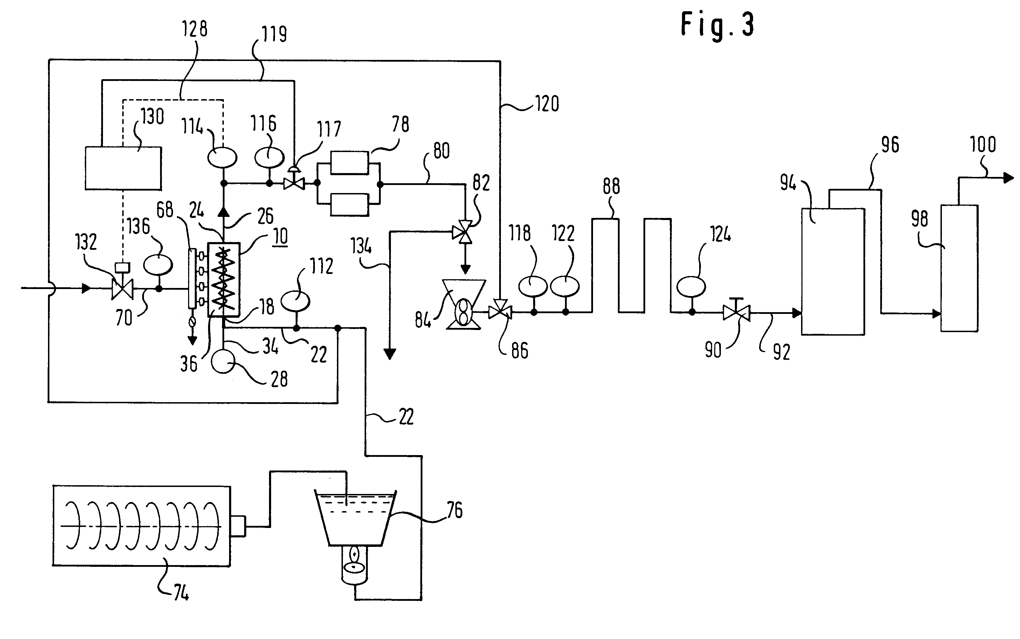

In Fig. 3 the vessel 10 is shown as a component of a process cheese production line. Fig. 3 shows a blender 74 in which natural cheese is comminuted and blended with usual additives like milk, butter, emulsifyers, spices, water etc. A plurality of such blenders 74 are provided which alternatively supply the blended mass to an "Auger-pump" 76. The "Auger-pump" 76 conveys the blended mass as a continuous product stream through the inlet line 22 to the inlet opening 18 of the vessel 10. The outlet line 26 of the treating vessel 10 is connected to a filter unit 78 which is again connected through a line 80 and a switch-over valve unit 82 to a further "Auger-pump" 84. The pressure side of the "Auger-pump" 84 is connected by a switch-over valve 86 to a holding line 88. At the end of the holding line is a back pressure valve 90 intended to maintain a predetermined pressure within the holding line 88. The exit of the back pressure valve 90 is connected by a line 92 to flash cooling tank 94 which is again connected by a line 96 to a further cooling apparatus 98 which may be a "Terlet" cooling apparatus, manufactured by Terlet N.V., 7200 AB Zutphen, Netherlands. From the cooling apparatus 98 a line 100 leads to a filling station in which the treated product is filled into sale containers or intermediate containers.

The production line as shown in Fig. 3 and the apparatus as shown in Figs. 1 and 2 work as follows, assuming process cheese is to be treated:
The cheese particles and the other ingredients are filled into the blender 74 and comminuted therein such as to form a creamlike product in a batch-wise process. This cream-like product is continuously conveyed from subsequent blenders 74 to the "Auger-pump" 76 and is conveyed through the line 22 to the inlet opening 18 of the vessel 10. The cream-like product is to be heated in the vessel 10 and to be further conveyed from the vessel 10 through the filter 78, the line 80, the "Auger-pump" 84, the switch-over valve 86, the holding line 88, the flash cooling tank 94, the line 96, the cooling apparatus 98 and the line 100 to the filling station in which the end product is to be packaged.

This general flow scheme corresponds to a stationary state of a continuous operation. The cream-like product enters into the treating chamber 36 at about ambient temperatur of, for example, 20°C. The conveyor shaft 34 is rotated at high R.P.M. Assuming now that the treating chamber 36 is completely filled with the cream-like product a recirculation takes place due to the rotation of the first and second helical conveyor units 38 and 40. This recirculation is a substantially toroidal recirculation as indicated by the dotted lines 102 in Fig. 1. This toroidal recirculation 102 has - when regarded in the longitudinal section of Fig. 1 - an axis 103. The axis 103 is one of a plurality of axis tangential to a circle around the axis A. The geometrical axis of the toroid structure is coincident with the axis A. The toroidal recirculation implies a down-stream flow of the recirculated stream near the axis A and adjacent the second helical conveyor unit 40 and an upward stream adjacent the circumferential wall 16 and the radially outer or first helical conveyor unit 38. It is to be noted that the flow direction near the axis A is opposite to the general flow direction through the treating chamber 36 which general flow direction is indicated by arrows 104 at the inlet opening 18 and-outlet opening 24 of the vessel 10.

The cross-sectional area of the vessel 10 is considerably larger than the cross-sectional area of the inlet opening 18 and the outlet opening 24. Due to the increased cross-sectional area of the vessel 10 the average dwelling time of a product volume element within the treating chamber 36 is considerably increased as compared with the average dwelling time within a line section stream upward or downward of the vessel having an identic length along the flow path as the vessel. Heated steam is introduced into the treating chamber 36 through the nozzles 52 which are shown in more detail in Fig. 2. The heated steam enters into the treating chamber through the steam inlet nozzles 52 in the form of hollow conical jets. The heating steam is at super-atmospheric pressure such as to open the inlet nozzles 52 against the action of the springs 64. Thus, in case of a higher pressure of the product within the vessel 16 as compared with the pressure of the heating steam the vessel is closed and no product can enter into the valve housing 62, the supply line 66 and the manifold 68.

The steam injected through the nozzles 52 impinges the product located at the respective locations of the nozzles 52. The toroidal recirculation stream as indicated at 102 in Fig. 1 is generally not a laminar stream it is rather a turbulent stream with secondary vortices as indicated at 106, 108 and 110. Such, a volume element of a product stream which is at a certain time aligned with a steam jet and is directly impinged by a steam jet is in a status of high turbulence not only by the toroidal recirculation but also due to the secondary vortices created by the toroidal recirculation. Thus a volume element of the product stream directly impinged by a heating steam jet is rapidly mixed with other volume elements of the product stream and can transfer the heat received from the steam jet to other volume elements of the product. Thus, the exposure time interval during which the directly impinged volume element is exposed to the temperature of the heating steam is short. Thus, there is no risk of overheating and degradation of the product within the treating chamber.

It is to be noted that high intensity of turbulence exists at locations as indicated by the vortex 108 where the upward directed stream as indicated by the arrow 42 and the downward stream as indicated at 44 form a shearing zone radially between the first helical conveyor unit 38 and the second helical conveyor unit 40.

The distribution of the inlet nozzles 52 along the axial length 54 as indicated in Fig. 1 and the distribution of the inlet nozzles 52 around the circumference of the circumferential wall 16 has the result that a predetermined steam inlet rate into the treating chamber 36 is distributed over a large surface of the circumferential wall. Thus, the inlet rate of heating steam per nozzle is relatively small. Thus, the heat input transferred to a volume element of the product of a certain time by direct impingement of a steam jet is reduced. As a result thereof a relatively small volume of the treating chamber is sufficient for increasing the temperature of the product from ambient temperature at the inlet opening 18 to, for example, 98°C at the outlet opening 24. At the outlet opening 24 the temperature of the heated product is substantially homogeneous. The circumferential wall 16 is continuously cooled by the cooling agent, by the cooling jacket 46, such that overheating of the surface zone of the wall 16 is avoided; this is particularly of importance for the surface areas of the circumferential wall 16 which are close to the inlet nozzles 52.

The product stream leaving the treating chamber 36 flows along line 26 to the filter unit 78, in which curd specks resulting from thermal degradation can be withdrawn. As the degradation of the product is extremely reduced it is sufficient to clean or replace the filter elements of the filter unit 78 at considerable time intervals. The valve 82 allows to maintain a desired pressure downstream and upstream of the filter unit 78 and more particularly in the treating chamber 36. The pressure of the product stream is released downstream of the switch-over valve 82 when the product stream enters into the "Auger-pump" 84. The "Auger-pump" 84 conveyes hereupon the product through a holding line 88 and the pressure therein is adjusted in the valve 90. The dwelling time within the holding line 88 is selected such that a desired degree of pasteurization/sterilization is obained.

The product flowing from the pressure valve 90 to the flash cooling tank 94 is flash-like expanded within the tank 94 and is cooled thereby. Further cooling takes place in the cooling apparatus 98. At the exit of the cooling apparatus 98 the temperature of the product is as low as to enable the packaging of the product.

The flow rate of the product to be heated is determined by the "Auger-pump" 76 and can be measured by flow rate measuring device 112. The temperature of the product at the exit of the treating chamber 36 is measured by a temperature measuring device 114. The pressure within the treating chamber 36 can be measured by a pressure device 116 and be maintained by a throttle valve 117 downstream said pressure device 116. The flow rate through the holding line 88 is measured by a flow rate measuring device 118. While in stationary operation the flow rate at 118 is substantially identic with the flow rate measured at 112 the flow rate measuring device 118 is desirable on the one hand for measuring the increase of flow rate due to the introduction of the steam and on the other hand for measuring the flow rate through the holding line 88 even if part of the flow rate through the "Auger-pump" 84 is recirculated to the inlet opening of the treating chamber by a back flow conduit 120 which will be discussed later in detail. A pressure measuring device 122 allows to measure the pressure in the holding line 88 as adjusted by the back pressure valve 90. The temperature at the exit of the holding line 88 is measured by a temperature measuring device 124.

It is assumed now that the production line is dimensioned for a predetermined flow rate of the product through the treating chamber 36 and that a predetermined temperature raise is to be obtained within the treating chamber 36. This temperature raise can be adjusted by the temperature and the flow rate of the heating steam entering into the treating chamber 36.

It is further assumed that the heating steam is available from a source of steam having a predetermined temperature. Then the desired raise of temperature can be adjusted by selecting the flow rate of the steam entering into the treating chamber 36 through line 70 and manifold 68. The temperature of the product stream at the exit of the treating chamber 36 is measured by the temperature measuring device 114. The measured actual value of the product stream temperature is fed by a feed-back line 128 to a control unit 130. The temperature of the product stream as measured by the measuring device 114 is compared with the desired temperature at the outlet line 26 of the treating chamber 36. The difference between the measured temperature value and the desired value is used for adjusting a metering valve 132 which is to adjust the flow rate of the heating steam such as to obtain the desired temperature at the outlet line 26 of the treating chamber 36. The control unit 130 further controls the pressure within the treating chamber 10 by adjusting the control valve 117 via a line 119.

The number of revolutions of the conveyor shaft 34 is responsible for a rapid distribution of the heat input to the treating chamber 36 throughout the product contained in the treating chamber. The occurrence of curd specks is decreased if the distribution of the total heat input on the total volume of the treating chamber 36 is accelerated. Accordingly, the occurrence of curd specks is reduced by increasing the R.P.M. of the conveyor shaft 34. The occurrence of the amount of curd specks generated by time unit can be measured by the filter unit 78, for example, by weighing at certain time intervals the residues retained by the filter unit 78. If the amount of curd specks exceeds an admissible value the R.P.M. of the conveyor shaft 34 is to be increased as vice versa.

The apparatus of this invention and the production line incorporating the apparatus is very flexible with respect to change of the type of product and also to variation of flow rate of the product stream.

The above described performance was based on the assumptions that a stationary operating state has already been achieved. At the initiation of the treating process as described before the temperature of the product at the outlet of the treating chamber is only slowly increased to the desired value. This is primarily due to the storing capacity of the treating chamber 36 and to the time constant of the controlling mechanism. Therefore, the product obtained at the outlet of the treating chamber 36 is of reduced quality during the initial phase. This product of minor quality should not be delivered to the packing station. On the other hand one wants to avoid losses in product as far as possible. Therefore, the back flow conduit 120 is provided. This back flow conduit 120 allows to return the product fed through the input line 22. Thus, the loss of product during the initial state of operation can be kept at a minimum. Nevertheless, the switch-over valve 82 allows to discharge non-usable product through a discharge line 134.

The inlet nozzles 52 may be used for introducing a cleaning agent into the treating chamber after the termination of a period of operation. Preferably the shape of jets provided by the inlet nozzles is selected such that all areas within the treating chamber which require intense cleaning are impinged by the jets of the cleaning agent, such that disassembling of the apparatus for cleaning purposes may be avoided.

A further important feature of the present invention is that the product having been treated within the treating chamber 36 is released to atmospheric pressure at the outlet switch-over valve 82, i.e. at the entrance of the "Auger-pump" 84. This feature allows to maintain desired pressures of the product within the treating chamber 36 and within the holding line 88 independently from each other.

Example of operation: the production line is designed for the production of process cheese. The preproduct to be treated in the production line is obtained in the blender 74 by mixing during a mixing time of 30 minutes to 120 minutes by mixing natural cheese with the selected additives as mentioned above. The volume of the blender 74 corresponds, for example, to 1000 - 6000 kg of the product. The blender may be a screw blender with the blending screw being driven at about 60 to 120 R.P.M. The volume of the treating chamber 36 is 2600 cm³. The R.P.M. of the conveyor shaft 34 may be up to 3000. The driving unit 28 of the conveyor shaft may comprise a driving motor of about 5,5 kW. The product stream through the production line as measured, for example, at 112 and/or 118 is 150 - 3500 kg/h. The temperature of the product stream at the inlet opening 18 of the treating chamber 36 is about 20 - 40°C. The temperature of the product stream at the outlet opening 24 of the treating chamber 36 as measured, for example, at 114 is about 98°C. The steam temperature at the inlet nozzles 52 is about 180°C with a pressure of 6 - 10 bar and preferably about 8 bar. The flow rate of the steam as measured, for example, by a flow rate measuring device 136 is adjusted such as to obtain the desired temperature of about 98°C at the outlet line 26 of the treating chamber 36.

The absolute pressure in the treating chamber 36 is maintained at about 3,8 bar at 140°C by the throttle valve 117 downstream said treating chamber 36. The absolute pressure within the holding line 88 is adjusted by adjustment of the back pressure valve 90 to about 1 to 3,7 bar. The average dwelling time of the product between the outlet opening 24 of the treating chamber 36 and the "Auger-pump" 84 is about 10 sec. The average dwelling time of the product along the flow path from the "Auger-pump" 84 to the back pressure valve 90 is bout 40 sec by selection of the length of the holding line 88 and/or the flow velocity therein. The temperature of the product after having been partially cooled within the flash cooling tank 94 is about 95°C. The temperature of the product stream at the exit of the additional cooling apparatus 98 is about 75°C.

The degree of pasteurization/sterilization is a function of the temperature of the product stream at the outlet opening 24 of the treating chamber and of the temperature along the flow path between the outlet 24 and the flash cooling tank 94. Further the degree of pasteurization/sterilization is a function of the average dwelling time of the product within the treating chamber 36 and along the flow path from the outlet opening 24 to the flash cooling tank 94. One can take samples, for example, in the line 92 of the heated product and count the number of germs within the product stream at this location. If the counted number of germs is within a predetermined range the adjustment of the steam temperature and the flow rate of the steam entering into the chamber 36 is correct. If the number of germs is beyond the predetermined range the temperature and/or the inlet rate of the steam into the treating chamber 36 may be adjusted.

A total condensation of the heating steam within the treating chamber is desirable. The process cheese product obtained by the above described production line may be used as a spread or be shaped into slices.

A period of operation may correspond to the treatment of the content of 1:6 batch-wise operating blenders 74 which are connected to the "Auger-pump" 76.

## Claims

1. A method of treating a continuous product stream of a liquid or a semi-liquid food product flowing along a flow path (22,18,36,24,26), said method comprising:
creating turbulence in said product stream at least within a turbulent flow path section (36) of said flow path (22,18,36,24,26) and injecting a treating fluid (at 52) into said turbulent flow path section (36),
said method further comprising:
recirculating said product substantially within the length of said turbulent flow path section (36) along at least one loop (102) having a loop axis (103) substantially perpendicular to a general flow direction (104) of said product stream through said turbulent flow path section (36).

2. A method as set forth in claim 1,
said method further comprising creating a substantially toroidal recirculation stream (102) with a toroid axis (A) substantially parallel to said general flow direction (104) through said turbulent flow path section (36).

3. A method as set forth in claim 2,
said method further comprising shaping said toroidal recirculation stream such that - when regarded in a plane of longitudinal section containing said general flow direction (104) - a sectional area of said toroidal recirculation stream (102) has a longer sectional area axis (a) in parallel with said general flow direction and a shorter sectional area axis (b) perpendicular to said general flow direction (104).

4. A method as set forth in claim 3,
creating said toroidal-recirculation stream (102) with a recirculation sense such that in a radially inner zone of said toroidal recirculation stream (102) the flow direction (44) of the toroidal recirculation stream (102) is substantially opposite to said general flow direction (104).

5. A method as set forth in one of claims 2 to 4,
said toroidal recirculation stream (102) being generated by helical conveyor units (38,40) having a common axis (A) substantially parallel to or coincident with said general flow direction (104), said helical conveyor units (38,40) comprising at least one radially inner (40) and one radially outer helical conveyor unit (38) axially overlapping each other, said radially inner (40) and said radially outer helical conveyor units (38) having axially opposite conveying directions (42,44).

6. A method as set forth in one of claims 1 to 5,
said method further comprising introducing treating fluid jets (at 52) into said turbulent flow path section (36), said treating fluid jets (at 52) being distributed along a substantial part (54) of the length of said turbulent flow path section (36) along the general flow direction (104) of said product stream through said turbulent flow path section (36).

7. A method as set forth in claim 6,
said treating fluid jets (at 52) being substantially evenly distributed over circumferential wall means (16) circumferentially confining said turbulent flow path section (36).

8. A method as set forth in one of claims 1 to 7,
said method of treating being a heating method, said treating fluid being a heating steam.

9. A method as set forth in claim 8,
said heating steam being introduced into said turbulent flow path section (36) at a temperature higher than a predetermined degradation temperature of the respective food product, the turbulence of the food product at respective locations (52) of steam injection being selected as high as to avoid degradation of the food product.

10. A method as set forth in claim 8 or 9,
the volume of said turbulent flow path section (36), the flow rate of said product stream along said flow path (22,18,36,24,26), the rheological behavior of said food product, the heat conductivity of said food product, the specific heat of said food product, the total input rate of heating steam, the distribution of heating steam injection means (52) over the turbulent flow path section (36), the heating steam temperature and the turbulence of said product stream being selected such that a major portion of infinitesimally small volume elements of said product stream is subject to a temperature-time-profile admissible for the respective food product.

11. A method as set forth in one of claims 8 to 10,
said heating of said product stream being controlled such as to obtain a predetermined degree of pasteurization/sterilization on the one hand and to avoid thermal degradation of said food product on the other hand, said controlling comprising:
a) measuring at least one parameter representing a degree of pasteurization/sterilization at a respective measuring location (124) downstream said turbulent flow path section (36);
b) measuring at least one parameter representing a degree of thermal degradation of the food product at a respective measuring location (78) downstream said turbulent flow path section (36);
c) adjusting at least one of a heating steam inlet temperature and a heating steam input rate in dependency of the difference between said measured parameter representing the degree of pasteurization/sterilization and a predetermined value of said parameter representing the degree of pasteurization/sterilization;
d) adjusting the recirculation in dependency of the difference between said measured parameter representing the degree of degradation and a predetermined value of said parameter representing the degree of degradation.

12. A method as set forth in one of claims 1 to 11,
said method further comprising cooling flow path section confining means (10) confining said turbulent flow path section (36).

13. A method as set forth in one of claims 1 to 12,
said food product being a milk-based product.

14. A method as set forth in one of claims 1 to 13,
said product being one of a process cheese-type product and a process cheese-type preproduct, said treating fluid being at least one of a heating steam and an additive fluid.

15. A method as set forth in one of claims 1 to 7 and 12,
said food product being-a mayonnaise-type product, said treating fluid being at least one of a whipping fluid and an additive fluid.

16. A method as set forth in one of claims 8 to 14,
said heating steam being saturated steam.

17. A method as set forth in one of claims 1 to 7, 12 and 15,
said treating method being a whipping method, said treating fluid being a gas phase or vapor phase whipping fluid.

18. A method of treating a continuous product stream of a liquid or a semi-liquid food product flowing along a flow path (22,18,36,24,26), said method comprising:
creating turbulence in said product stream within a turbulent flow path section (36) of said flow path (22,18,36,24,26) and jet-wise introducing a treating fluid (at 52) into said turbulent flow path section (36),
said method further comprising introducing treating fluid jets (at 52) into said turbulent flow path section (36) at locations (52) substantially evenly distributed over at least an axial middle portion (54) of circumferential wall means (16) circumferentially confining said turbulent flow path section (36).

19. A method as set forth in claim 18,
said middle portion (54) comprising at least 20%, preferably at least 50% of the axial length of said turbulent flow path section (36).

20. A method as set forth in claim 18 or 19,
said method further comprising: introducing treating fluid jets into said food product within said turbulent flow path section at locations spaced in radial inward direction from said circumferential confining means.

21. An apparatus for treating a continuous stream of a liquid or a semi-liquid food product flowing along a flow path (22,18,36,24,26), said apparatus comprising:
a treating chamber (36) arranged in series within said flow path (22,18,24,26) and confined by chamber confining means (10),
turbulence creating means (38,40) within said treating chamber (36) for creating turbulence in said product stream,
treating fluid injection means (52) for injecting treating fluid into said treating chamber (36),
said turbulence creating means (38,40) comprising a recirculation impelling means (38,40) for recirculating said product substantially within the length of said treating chamber (36) along at least one loop (102) having a loop axis (103) substantially perpendicular to a general flow direction (104) of said product stream through said treating chamber (36).

22. An apparatus as set forth in claim 21,
said treating chamber (36) having an inlet end portion (12), an outlet end portion (14), an axis (A) extending between said inlet end portion (12) and said outlet end portion (14) and circumferential wall means (16) around said axis (A), said recirculation impelling means (38,40) comprising at least one helical conveyor unit (38), and preferably at least one radially outer helical conveyor unit (38) and at least one radially inner helical conveyor unit (40) arranged about said axis (A), said conveyor units (38,40) having axially opposite conveying directions (42,44).

23. An apparatus as set forth in claim 22,
said radially inner and radially outer helical conveyor units (40,38) being fixed on a common driving shaft (34) and having opposite winding directions.

24. An apparatus as set forth in claim 22 or 23,
said radially inner and said radially outer conveyor units (40,38) forming a radial interspace (at 108) between each other.

25. An apparatus as set forth in one of claims 22 to 24,
said radially inner helical conveyor unit (40) having a conveying direction (44) opposite to said general flow direction (104).

26. An apparatus as set forth in one of claims 22 to 25,
at least one (14) of said end portions (12,14) being provided with or shaped as stream inverting means.

27. An apparatus as set forth in one of claims 22 to 26,
at least one of said inlet end portion (12) and said outlet end portion (14) having an inlet opening (18) and an outlet opening (24), respectively, in a central location with respect to said axis (A).

28. An apparatus as set forth in one of claims 22 to 27,
said treating fluid injection means (52) being substantially evenly distributed over at least an axial middle portion (54) of said circumferential wall means (16).

29. An apparatus as set forth in claim 28,
said middle portion (54) extending along at least 20%, preferably at least 50%, of the axial length of said treating chamber (36) between said end portions (12,14) thereof.

30. An apparatus as set forth in one of claims 21 to 29,
said treating fluid injection means (52) comprising non-return fluid injection nozzles (52).

31. An apparatus as set forth in one of claims 21 to 30,
at least a part of said chamber confining means (10) being provided with cooling means (46,48,50).

32. An apparatus as set forth in one of claims 21 to 31,
said apparatus comprising a back flow conduit (120) extending between respective locations of said flow path (22,18,36,42,26) downstream and upstream said treating chamber (36) and flow control means (86) allocated to said back flow conduit (120).

33. An apparatus for treating a continuous stream of a liquid or a semi-liquid food product flowing along a flow path (12,18,36,24,26), said apparatus comprising:
a treating chamber (36) arranged in series within said flow path (12,18,36,24,26),
turbulence creating means (38,40) within said treating chamber (36) for creating turbulence of said product stream,
treating fluid injection means (52) for injecting treating fluid into said treating chamber (36),
said treating chamber (36) having an inlet end portion (12) an outlet end portion (14), an axis (A) extending between said inlet end portion (12) and said outlet end portion (14) and circumferential wall means (16) around said axis (A),
said treating fluid injection means (52) being substantially evenly distributed over at least an axial middle portion (54) of said circumferential wall means (16).

34. An apparatus as set forth in claim 33,
said middle portion extending along at least 20%, preferably at least 50%, of the axial length of said treating chamber (36) between said end portions thereof.

35. An apparatus as set forth in claim 33 or 34,
said treating fluid injection means being arranged within said treating chamber at locations spaced in radial inward direction from said circumferential wall means.

36. An apparatus as set forth in one of claims 21 to 35,
said treating chamber (36) being a heating chamber (36) and said treating fluid injections means (52) being steam injection means (52) connected to a source of heating steam.

37. An apparatus as set forth in one of claims 21 to 36,
said treating chamber (36) being a whipping chamber (36) and said treating fluid injection means (52) being connected to a source of a gas phase or a vapor phase whipping fluid.

38. An apparatus as set forth in one of claims 21 to 37,
said apparatus being arranged in series with at least one of a filter unit (78), a holding line (88) and cooling means (94,98).

39. An apparatus in a series arrangement as set forth in claim 38 with a holding line (88) downstream of said apparatus, said holding line (88) being connected to said apparatus through a pressure release station (84).
